# EUROPEAN PATENT SPECIFICATION

(11) **EP 3 755 146 B1**
(45) Date of publication and mention of the grant of the patent: **26.08.2026**
(21) Application number: 19706273.0
(22) Date of filing: 21.02.2019
(51) Int. Cl.: A01N 25/04

(54) **PESTICIDE SUSPENSION CONCENTRATE AND FERTILIZER COMPOSITION THEREWITH**
PESTIZIDSUSPENSIONSKONZENTRAT UND DÜNGEMITTELZUSAMMENSETZUNG DAMIT
CONCENTRÉ DE SUSPENSION DE PESTICIDE ET COMPOSITION D'ENGRAIS CORRESPONDANT

(30) Priority: 23.02.2018 US 201862634264 P; 03.04.2018 EP 18165374
(43) Date of publication of application: 30.12.2020
(73) Proprietor: Nouryon Chemicals International B.V., 6824 BM Arnhem (NL)
(72) Inventor: BORACCI, Andrew Richard, New York 12590 (US); ZHU, Shawn, New York 12582 (US); FRANKLIN, Ralph, Danbury, Connecticut 06811 (US)
(74) Representative: Ingrassia, Fisher & Lorenz UK Ltd.
(86) International application number: PCT/EP2019/054266
(87) International publication number: WO 2019/162353

(56) References cited:
- EP-A1- 1 623 756
- EP-A1- 1 741 339
- WO-A1-2012/150163
- WO-A1-2017/007995
- RU-C1- 2 192 131

## Description

### BACKGROUND

A common agricultural practice includes the application of a concentrated fertilizer mixture to target plants and seeds. The concentrated fertilizer mixture, obtained by mixing a pesticide suspension concentrate with a concentrated fertilizer, is typically a liquid having suspended pesticides within the liquid phase and does not require further dilution with water. In particular, spraying a liquid starter fertilizer (so named because it is often applied at the same time that seeds are planted in soil) with suspended pesticides has become popular in recent years. In this practice, a suspension concentrate containing a pesticide is added to a solution of liquid starter fertilizer in a tank just before application of the fertilizer with suspended pesticides. The final fertilizer mixture (fertilizer with suspended pesticide) typically contains about 1-5% of the suspension concentrate and about 99-95% of liquid starter fertilizer. Machines are available that can, in one pass, plow open a furrow, deposit seeds to the open furrow, apply a small amount of the final fertilizer mixture near the seeds, and close the furrow to bury the seeds. The liquid starter fertilizer provides necessary nutrients for the young plant to grow while the pesticide, usually an insecticide or an insecticide plus a fungicide, provides protection against root damaging insects and fungi. Adding pesticides to a concentrated fertilizer other than a liquid starter fertilizer is also common because applying fertilizer together with a pesticide can save time.

Water-soluble fertilizers are salts and electrolytes. Concentrated fertilizer solutions are high electrolyte solutions with high ionic strength and the water molecules present therein are mostly tied up by the electrolyte ions. The ionic strength depends on the concentration and the charges of the ions.

10-34-0 fertilizer (10% N, 34% P, 0% K) is considered a starter fertilizer and has the highest ionic strength among common fertilizers because it contains about 56% ammonium polyphosphate dissolved in water. Sometimes micronutrients are added to 10-34-0 fertilizer, but the amounts of micronutrients are so small that their presence does not affect the properties of 10-34-0 fertilizer. It is known to be very difficult to dissolve or disperse other compounds into 10-34-0 fertilizer. For example, pesticide suspension concentrates in water are known and contain compounds that are useful to combine with some other fertilizers. However, most commercially available suspension concentrates cause immediate flocculation after they are added into 10-34-0 fertilizer. Flocculation prevents the even and consistent application of both the fertilizer and the pesticide to plants and/or seeds. Thus, a need exists for a pesticide suspension concentrate that is stable and that can be mixed with a concentrated liquid fertilizer, such as 10-34-0 fertilizer, to create a stable fertilizer mixture suitable for spraying. WO 2012/150163 proposes to stabilise aqueous suspensions of agrochemicals with phosphate esters, also in view of a further combination with fertilisers.

### SUMMARY

A stable suspension concentrate (SC) capable of being mixed with a concentrated fertilizer solution without forming nozzle-plugging particles includes a phosphate ester having the general formula: 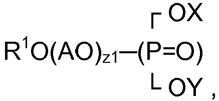 where X is selected from the group consisting of H, a cation and (AO)_{z2}R²; Y is selected from the group consisting of H, a cation and (AO)_{z3}R³; R¹, R² and R³ are alkyl hydrocarbon groups having from 4 to 11 carbon atoms; AO is an alkoxy group; and z1, z2 and z3 are numbers from 1 to 4. The suspension concentrate further includes a water-insoluble solid pesticide and water.

A method includes preparing a phosphate ester by reacting an alcohol alkoxylate with one or more phosphating agents (e.g., polyphosphoric acid and phosphorous pentoxide). The alcohol alkoxylate includes a base alcohol having from 4 to 11 carbon atoms and also includes, on average, between 1 and 4 alkoxy groups. The method further includes combining the phosphate ester with a water-insoluble solid pesticide and water to form a suspension concentrate.

### DETAILED DESCRIPTION

The present disclosure describes a stable suspension concentrate and a method of making such. The present disclosure also describes a method of combining the stable suspension concentrate with a concentrated liquid fertilizer. Hereafter, a suspension concentrate is considered to be a pesticide suspension concentrate (SC) before it is combined with a concentrated liquid fertilizer and a fertilizer mixture is considered to be the mixture after the pesticide SC is mixed with the concentrated liquid fertilizer. The suspension concentrate includes a phosphate ester, a water-insoluble pesticide and water. The present disclosure also describes a stable fertilizer mixture, and a method of making and using such, that includes the stable suspension concentrate and a concentrated liquid fertilizer.

The phosphate ester has the general formula: 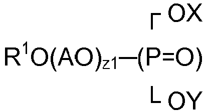 where X is selected from the group consisting of a hydrogen atom (H), a cation and (AO)_{z2}R²; Y is selected from the group consisting of H, a cation and (AO)_{z3}R³; R¹, R² and R³ are alkyl hydrocarbon (saturated or unsaturated, branched or linear) groups having from 4 to 11 carbon atoms; AO is an alkoxy group; and z1, z2 and z3 are numbers from 1 to 4. In some embodiments of the disclosure R¹, R² and R³ have from 6 to 11 carbon atoms. In other embodiments R¹, R² and R³ have from 9 to 11 carbon atoms. In one particular embodiment, substantially all R¹, R² and R³ groups present in the phosphate ester contain 10 carbon atoms. In other embodiments the R¹, R² and R³ groups present in the phosphate ester contain a mixture of carbon chains having 9, 10 or 11 carbon atoms. In one embodiment, substantially all R¹, R² and R³ groups are branched hydrocarbons (*e.g.,* isodecyl). According to the present disclosure, the R¹, R² and R³ groups do not contain an aryl group.

In an embodiment the suspension concentrate does not comprise any dispersant with an aryl group. In an embodiment the suspension concentrate does not contain a polystyryl group-containing phosphate. In an embodiment the suspension concentrate does not comprise a polyoxyalkylene polystyrylphenyl ether phosphate ester.

The cations according to the present invention are selected from Li, Na, K and ammonium.

The AO group refers to an alkoxy group derived from an alcohol alkoxylate having the general formula RO(AO)_{z}H. The alkoxy group can be an ethoxy group (EO, -CH₂CH₂O-), a propoxy group (PO, -CH₃CHCH₂O-) or a combination thereof (a mix of EO and PO groups). Together the AO and associated hydrocarbon group (R¹, R² or R³) form a polyether group. For the purposes of this application, the term polyether refers to a hydrocarbon chain containing two or more ether linkages (*e.g.,* R-O-(AO)_{z1}-). In a preferred embodiment, the AO is an ethoxy group. The variable z1 in (AO)_{z1} (and similarly z2 and z3) represents the average number of repeating alkoxy groups present per mole of phosphate ester in each polyether group (*e.g.,* R¹O(AO)_{z1}, X and/or Y). In one embodiment, z1, z2 and z3 independently have a value from 1 to 4, meaning, on average, each mole of phosphate ester will contain between about one and about four moles of an alkoxy group for each polyether group present (1, 2 or 3). While each individual phosphate ester molecule can contain less than 1 or more than 4 alkoxy groups per polyether group, all the phosphate ester molecules present will contain on average from 1 to 4 alkoxy groups per polyether group. In some embodiments, z1 (and z2 and/or z3) has a value from 2 to 3.5, meaning, on average, each mole of phosphate ester contains from 2 to 3.5 moles of an alkoxy group for each polyether group present. In other embodiments, z1 (and z2 and/or z3) has a value from 2.7 to 3.3, meaning, on average, each mole of phosphate ester contains between 2.7 and 3.3 moles of an alkoxy group for each polyether group present. Where X and/or Y are (AO)_{z}R groups, the z values for each (AO) group don't have to be identical (*e.g.,* z can be equal to 2 in the X group but z is equal to 3 in the Y group). That is, the degree of alkoxylation on each polyether group (O(AO)_{z}R or RO(AO)_{z}) attached to the phosphorous atom doesn't need to be the same.

Each mole of phosphate ester will contain between about one to three moles of the polyether groups. When X and Y are each H or a cation, the phosphate ester contains one polyether group and the phosphate ester is a monoalkylphosphate ester (monoester). In some molecules, X is (AO)_{z2}R² and Y is H or a cation. In these instances, the phosphate ester is a dialkylphosphate ester (diester). In still other molecules, X is (AO)_{z2}R² and Y is (AO)_{z3}R³. In this instance, the phosphate ester is a trialkylphosphate ester (triester). Each of these esters can be formed dependent upon the synthesis route taken to produce the phosphate ester, which is described in greater detail herein. The phosphate ester according to the present disclosure can contain a mixture of monoester, diester and triester molecules. It is believed that the monoester possesses the best compatibilizing properties of the different ester types. In some embodiments, at least about 60% (by weight) of the phosphate ester is the monoester. The balance of phosphate ester molecules includes the diester and the triester. For the purposes of this disclosure, the term "about" means within 10% (above or below) the value stated. In other embodiments, at least about 70% (by weight) of the phosphate ester is the monoester. The balance of phosphate ester molecules includes the diester and the triester. In other embodiments, at least about 80% (by weight) of the phosphate ester is the monoester. The balance of phosphate ester molecules includes the diester and the triester.

In some embodiments, the phosphate ester is in acid form and not a salt form (i.e. neither the X group nor the Y group are cations).

The suspension concentrate includes a water-insoluble solid pesticide. Suitable water-insoluble solid pesticides include insecticides, fungicides, bactericides, herbicides, acaricides, nematicides, anthelmintics, and plant growth regulators. Insecticides include pyrethroid insecticides and neonicotinoid insecticides. Fungicides include strobilurin fungicides, anilide fungicides, and dicarboximide fungicides. Examples of suitable insecticides include bifenthrin, imidacloprid, thiacloprid, acetamiprid, dinotefuran, nitenpyram, thiamethoxam, clothianidin, carbofuran, and 1-naphthyl methylcarbamate, fipronil and diflubenzuron. Examples of suitable fungicides include trifloxystrobin, azoxystrobin, fluoxastrobin, captan, fenhexamid, tebuconazole, difenoconazole, mancozeb, myclobutanil, sulfur, copper oxychloride, procymidone, cymoxanil, alpha-cypermethrin, thiabendazole, carbendazim, chlorothalonil, triadimefon and calcium carbonate. Examples of suitable herbicides include atrazine, simazine, prometryn, ametryn, terbutryn, terbuthylazine, diuron, fluometuron, linuron, thidiazuron, tralkoxydim, metsulfuron-methyl, nicosulfulron, diflufenican, triasulfuron, chlorsulfuron, metribuzin and clopyralid. More than one water-insoluble pesticide can be present in the suspension concentrate. The water-insoluble pesticides typically have a melting temperature above about 40 °C. Some water-insoluble pesticides have a melting temperature above about 60 °C, and still other water-insoluble pesticides have a melting temperature above about 80 °C. The water-insoluble pesticides have a water solubility of less than about 5% by weight of the overall composition at 20 °C. Some water-insoluble pesticides have a water solubility of less than about 3% by weight of the overall composition at 20 °C, and still other water-insoluble pesticides have a water solubility of less than about 1.0% by weight of the overall composition at 20 °C.

The suspension concentrate also includes water. The presence of the phosphate ester provides a stable dispersion (i.e. the suspension concentrate) in which the water-insoluble pesticide is suspended. The suspension concentrate contains between about 1% by weight and about 15% by weight of the phosphate ester, between about 4% by weight and about 50% by weight of the water-insoluble pesticide, and the balance of water (between about 35% by weight about 95% by weight). In some embodiments, the suspension concentrate contains between about 3% by weight and about 12% by weight of the phosphate ester. In other embodiments, the suspension concentrate contains between about 5% by weight and about 10% by weight of the phosphate ester. In some embodiments, the suspension concentrate contains between about 10% by weight and about 40% by weight of the water-insoluble pesticide.

In some embodiments, the suspension concentrate consists essentially of the phosphate ester described herein, the water-insoluble pesticide and water.

The phosphate ester described herein functions as a dispersant for the water-insoluble pesticide within the suspension concentrate, allowing the particles of the water-insoluble pesticide to be suspended within the water of the suspension concentrate. While some phosphate esters have been used as adjuvants to enhance the activity of pesticides in fertilizer solutions, the Applicant surprisingly discovered that the phosphate ester described herein can be used to form a stable suspension concentrate of a water-insoluble pesticide in water.

The suspension concentrate can be prepared by methods well-known to those skilled in the art. That is, the suspension concentrate can be prepared by mixing the phosphate ester, the water-insoluble pesticide and water at the proportions described herein. The components can be mixed together without particular order of addition at ambient temperature (typically about 10 °C to 30 °C depending on location). To ensure a stable suspension concentrate, the suspension concentrate is typically milled to obtain an average particle size of less than 10 microns, preferably less than 5 microns.

A stable suspension concentrate can include additional ingredients to provide benefits to the suspension concentrate and/or the fertilizer mixture. For example, the suspension concentrate can include propylene glycol at a concentration of about 1% by weight to about 10% by weight. Propylene glycol provides anti-freezing properties to the suspension concentrate. The suspension concentrate can include a defoamer at a concentration of about 0.1% by weight to 0.5% by weight. The defoamers, typically silicone based, serve to prevent foam formation during preparation of suspension concentrate. The additional ingredients described herein can be added to the suspension concentrate before, at the same time as or after the water-insoluble solid pesticide is mixed with the water and the phosphate ester. The suspension concentrate can also include a thickener at a concentration of less than about 0.1% by weight. A thickener includes any substance that increases the viscosity of an aqueous composition. The thickener can further stabilize and increase the viscosity of the suspension concentrate and the fertilizer mixture, which may become necessary when the suspension concentrate is stored at elevated temperature. Preferably, the thickener is xanthan gum. Typically the thickener is added to the suspension concentrate after milling and is mixed until the viscosity is fully developed. In other suspension concentrates (those outside of the present disclosure), the suspension concentrates typically require at least 0.2% by weight of thickener in the formulations to ensure sufficient storage stability. However, as demonstrated in the examples herein, suspension concentrates according to the present disclosure can be stabilized with as little as 0.05% by weight of xanthan gum if the phosphate ester of the present invention is used. Since aqueous thickeners are not typically compatible with concentrated liquid fertilizers, their concentration should be limited to as low as possible. For example, when the xanthan gum concentration in a suspension concentrate is 0.2% by weight or higher, after the suspension concentrate is added to 10-34-0 fertilizer, the xanthan gum is salted out (i.e., phase separated) into nozzle-plugging particles. The suspension concentrate described herein requires less xanthan gum, when present, preventing and/or reducing the formation of nozzle-plugging particles. The suspension concentrate can also include inorganic salts such as ammonium polyphosphate, the active ingredient in 10-34-0.

In some embodiments, the suspension concentrate contains no additional dispersant (*e.g.,* polyoxyalkylene polystyrylphenyl ether phosphate esters) apart from the phosphate ester described herein and no additional solvents (*e.g.,* dimethyl sulfoxide and tetramethylene sulfone).

The pH of the suspension concentrate is typically between about pH 2 and about pH 7. In some embodiments, the suspension concentrate has a pH between about pH 2 and about pH 5. In other embodiments, the suspension concentrate has a pH between about pH 2 and about pH 3. Potassium hydroxide, sodium hydroxide, ammonium hydroxide and other bases can be used to increase the pH of the suspension concentrate. In one embodiment, ammonium polyphosphate, a buffer, is used as a neutralization agent.

In some embodiments, the suspension concentrate is substantially free of clay and clay minerals. For the purposes of this disclosure, the term "substantially free" means that the suspension concentrate contains less than 1% by weight, more preferably less than 0.5% by weight, of clay and clay minerals.

The suspension concentrate described herein remains stable for a period of time following its preparation. With regard to the suspension concentrate, "stable" refers to a uniform dispersion of the water-insoluble pesticide in an aqueous medium (i.e. the water and phosphate ester, with or without dissolved fertilizer), in which no visible separation or flocculation occurs. The storage stability is defined as a product that has less than about 10% top clear (or bleeding) after 2 weeks of storage at 54 °C. If separation occurs, the formulation should be able to be re-mixed into a homogeneous suspension concentrate with low shear mixing or gentle agitation.

A fertilizer mixture, one application of the suspension concentrate of the disclosure, includes the suspension concentr...ate and a concentrated liquid fertilizer. The concentrated liquid fertilizer can include a 10-34-0 fertilizer as described herein. Other suitable concentrated liquid fertilizers include ammonium sulfate ((NH₄)₂SO₄/ammosul/AMS/21-0-0/21-0-0-24S), urea-ammonium nitrate (UAN/32-0-0/URAN^{®}-32, available from PotashCorp, Northbrook, IL). The fertilizer mixture contains between about 1% by weight and about 10% by weight of the suspension concentrate and between about 90% by weight and about 99% by weight of the concentrated liquid fertilizer. In some embodiments, the fertilizer mixture contains between about 2% by weight and about 7% by weight of the suspension concentrate and between about 93% by weight and about 98% by weight of the concentrated liquid fertilizer. In one embodiment, the fertilizer mixture contains about 5% by weight of the suspension concentrate and about 95% by weight of the concentrated liquid fertilizer.

The fertilizer mixture is prepared by combining the concentrated liquid fertilizer with the suspension concentrate at the proportions described herein. The components can be mixed together at ambient temperature (typically about 10 °C to 30 °C depending on location).

The fertilizer mixture described herein remains stable for a period of time following its preparation. With regard to the fertilizer mixture, "stable" refers to a uniform mixture, in which no visible nozzle plugging particle or flocculation is present. In some embodiments, the fertilizer mixture remains stable at room temperature (25 °C) for 30 minutes after it is prepared. In other embodiments, the fertilizer mixture remains stable at room temperature (25 °C) for two hours after it is prepared. In still other embodiments, the fertilizer mixture remains stable at room temperature (25 °C) for four hours after it is prepared. In one embodiment, the fertilizer mixture remains stable at room temperature (25 °C) for six hours after it is prepared. In still other embodiments, the fertilizer mixture remains stable at room temperature (25 °C) for sixteen hours after it is prepared. In one embodiment, the fertilizer mixture remains stable at room temperature (25 °C) for twenty-four hours after it is prepared. A fertilizer mixture with longer stability allows more time for a user to spray it. In some cases, a cream, an opaque layer, may develop on top of the fertilizer mixture. The fertilizer mixture is considered stable if the amount of cream is less than about 7% (vol) after 24 hours as long as the cream can be re-mixed back into the original homogenous state with gentle mixing.

As noted herein a method for making the suspension concentrate includes the steps of preparing a phosphate ester and combining the phosphate ester with a water-insoluble solid pesticide and water to form a suspension concentrate.

In some embodiments, the phosphate ester is prepared by reacting an alcohol alkoxylate with one or more phosphating agents (*e.g.,* polyphosphoric acid and phosphorous pentoxide). The alcohol alkoxylate includes a base alcohol having between 9 and 11 carbon atoms, and on average, between 1 and 4 alkoxy groups. The alcohol alkoxylate can be purchased or prepared by alkoxylating an alcohol having between 9 and 11 carbon atoms. In a preferred embodiment, the base alcohol is isodecyl alcohol and the alkoxy group is an ethoxylate group.

Polyphosphoric acid (HO(PO₂OH)ₓH) and/or phosphorous pentoxide (P₂O₅) can be reacted with the alcohol alkoxylate to form the phosphate ester. The selection of phosphating agent (polyphosphoric acid, phosphorous pentoxide or a combination of both) can determine the amount of monoester, diester and triester formed. In cases where only polyphosphoric acid is used as the phosphating agent, the resulting phosphate ester is primarily the monoester with small amounts (less than about 10%) of the diester. Where polyphosphoric acid is used, inorganic phosphate residues, such as orthophosphoric acid, will be present with the phosphate ester. When phosphorous pentoxide is used as the phosphating agent and the ratio between the phosphating agent and the alcohol alkoxylate is about 1:3, roughly equal amounts of monoester and diester are formed and the phosphate ester contains smaller amounts of inorganic phosphate residues. If the relative concentration of the alcohol alkoxylate is increased, more diester is formed. If the relative concentration of the alcohol alkoxylate is decreased, more monoester is formed. It was observed that combinations of polyphosphoric acid and phosphorous pentoxide as the phosphating agent produced a phosphate ester more effective than either polyphosphoric acid or phosphorous pentoxide alone. Neutralization of the reaction product of the alcohol alkoxylate and phosphating agent can also be performed using an organic or inorganic base.

The disclosure also provides a method for making a fertilizer mixture, which includes combining the suspension concentrate described herein with a concentrated liquid fertilizer to form a fertilizer mixture.

### Examples

### Example 1. Preparation of an Alcohol Alkoxylate

Exxal^{™} 10 (600.0 g, 3.89 moles, Mw = 155.78 g/mole) (available from ExxonMobile Chemical Company, Spring, TX) and KOH (4.5 g, 0.4 wt % , aq. 45 %) were charged to a Parr Reactor (2 L) and heated to 160 °C with N₂ sparge (4 slm) for two hours. The moisture of the Exxal 10 was found to be 0.04 wt. % at this stage. The reactor was pressurized with about 15 psig nitrogen and kept in the reactor. Ethylene oxide was then fed to the weight in such a way that the pressure was within 40 psig at 160-61 °C. After the addition of ethylene oxide (500.0 g, 2.92 moles) over a period of one hour, the reaction was digested at 160 °C for one hour. A sample was taken out at this stage for analysis of hydroxyl value. Then the reaction was cooled to 65 °C sparge with nitrogen for one hour and the product was discharged. The mass balance is shown in Table 1.

**Table 1: Mass Balance**

| **Materials In** | Weight (gm) |
|---|---|
| Exxal^{™} 10 | 606.0 |
| KOH (aq. 45%) | 4.5 |
| Ethylene oxide | 500.0 |
| Total | 1110.5 |

| **Materials Out** | |
|---|---|
| Exxal 10 + 3 EO | 1082.0 |
| Sample taken out | 28.0 |
| Loss of material | 0.5 |
| Total | 1110.5 |

### Example 2. Preparation of a Phosphate Ester

11.9 kg of the alcohol ethoxylate product of Example 1 was added to a 20 L reactor and the reactor temperature was raised to 55 °C under nitrogen. 3.443 kg of polyphosphoric acid (115%) was added to the reactor over a period of three hours. Digestion at 65 °C for three hours followed. 570 g of phosphorous pentoxide was added to the reactor over a period of 45 minutes while the temperature remained at 65 °C. The temperature was then increased to 75 °C for two hours. The reactor was held between 75 °C and 78 °C for five hours, after which 15.8 kg of phosphate ester product was discharged.

The phosphate ester product had a strong acidity value of 2.954 meq/g and a total acidity of 5.666 meq/g. An NMR analysis of the phosphate ester product is shown in Table 2.

**Table 2. NMR Analysis of Phosphate Ester Product**

| | wt % |
|---|---|
| Monoester | 69.8 |
| Diester | 9.6 |
| Pyrophosphates | 11.2 |
| Free phosphoric acid | 5.7 |
| Unreacted alcohol | 3.8 |

### Example 3. Comparison of Various Phosphate Esters in Suspension Concentrates and Fertilizer Mixtures

The effects of similar phosphates esters in suspension concentrates and fertilizer mixtures were compared. The fertilizer mixture was formed by mixing a suspension concentrate (not fully optimized) with 10-34-0 fertilizer concentrate. The suspension concentrates were not fully optimized as a means of better evaluating the stability and effectiveness (both absolute and relative) of different phosphate esters.

Suspension concentrates were prepared using a variety of pesticides, the phosphate ester of Example 2 and three other phosphate esters: Phospholan^{®} PH-115 (branched C10 (2-propyl alcohol)-5 EO phosphate ester), Phospholan PH-118 (branched C10 (2-propyl alcohol)-8 EO phosphate ester), and Phospholan PS-131 (branched C13-6 EO phosphate ester, all available from Nouryon). Agnique^{®} DFM 111S (silicon-based defoamer) and water were also used. Each suspension concentrate was prepared at the concentrations shown in Table 3. All ingredients were charged to a suitably sized beaker and homogenized using an overhead homogenizer at 9000 to 12000 rpm for 3 to 5 minutes.

**Table 3. Suspension Concentrate Compositions**

| Component | wt % |
|---|---|
| Pesticide | 30 |
| Phosphate ester/dispersant | 8 |
| Agnique^{®} DFM 111S | 0.20 |
| Deionized water | 61.80 |

Table 4 presents stability results for each of the suspension concentrates after 24 hours of storage. Each suspension concentrate was stored at room temperature (25 °C). Stability was assessed by placing 100 mL of each suspension concentrate in a 100 mL graduated cylinder and visually observing the amount of phase separation, bleeding and flocculation.

**Table 4. Suspension Concentrate Stability**

| Pesticide | Example 2 Phosphate Ester | Phospholan PH-115 | Phospholan PH-118 | Phospholan PS-131 |
|---|---|---|---|---|
| Bifenthrin | Less than 8% bleeding; no flocculation | Less than 8% bleeding; no flocculation | 20% or more bleeding; visible flocculation | 8-15% bleeding; little to no flocculation |
| Imidacloprid | 8-15% bleeding; little to no flocculation | 20% or more bleeding; visible flocculation | 8-15% bleeding; little to no flocculation | 8-15% bleeding; little to no flocculation |
| Clothiandin | 8-15% bleeding; little to no flocculation | 20% or more bleeding; visible flocculation | 20% or more bleeding; visible flocculation | 20% or more bleeding; visible flocculation |
| Captan | 8-15% bleeding; little to no flocculation | 8-15% bleeding; little to no flocculation | 20% or more bleeding; visible flocculation | 20% or more bleeding; visible flocculation |
| Azoxystrobin | Less than 8% bleeding; no flocculation | 20% or more bleeding; visible flocculation | 20% or more bleeding; visible flocculation | 20% or more bleeding; visible flocculation |
| Trifloxystrobin | 8-15% bleeding; little to no flocculation | 8-15% bleeding; little to no flocculation | 20% or more bleeding; visible flocculation | 20% or more bleeding; visible flocculation |
| Fenhexamid | Less than 8% bleeding; no flocculation | Less than 8% bleeding; no flocculation | 8-15% bleeding; little to no flocculation | Less than 8% bleeding; no flocculation |

Despite their similar chemistries, the Example 2 phosphate ester demonstrated improved suspension concentrate stability over the others. This suggests that the Example 2 phosphate ester provides a more stable suspension concentrate.

The suspension concentrates prepared and described in Table 3 were used to prepare fertilizer mixtures. Each fertilizer mixture prepared contained 5% by weight of the suspension concentrate and 95% by weight of 10-34-0 fertilizer. The fertilizer mixtures were prepared by adding the suspension concentrate and the liquid fertilizer to a standard tube (graduated cylinder) and inverting the tube 20 times.

Table 5 presents stability results for each of the fertilizer mixtures after 30 minutes of storage. Each fertilizer mixture was stored at room temperature (25 °C). Stability was assessed by visually observing the amount of phase separation, bleeding and flocculation of each fertilizer mixture in its tube.

**Table 5. Fertilizer Mixture Stability and Comparison of Various Phosphate Esters**

| Pesticide | Example 2 Phosphate Ester | Phospholan PH-115 | Phospholan PH-118 | Phospholan PS-131 |
|---|---|---|---|---|
| Bifenthrin | Stable, uniform dispersion; no flocculation | Visible phase separation; some flocculation | Visible phase separation; some flocculation | Complete phase separation |
| Imidacloprid | Stable, uniform dispersion; no flocculation | Visible phase separation; some flocculation | Complete phase separation | Complete phase separation |
| Clothiandin | Stable, uniform dispersion; no flocculation | Visible phase separation; some flocculation | Complete phase separation | Complete phase separation |
| Captan | Stable, uniform dispersion; no flocculation | Visible phase separation; some flocculation | Stable, uniform dispersion; no flocculation | Complete phase separation |
| Azoxystrobin | Stable, uniform dispersion; no flocculation | Visible phase separation; some flocculation | Visible phase separation; some flocculation | Complete phase separation |
| Trifloxystrobin | Stable, uniform dispersion; no flocculation | Stable, uniform dispersion; no flocculation | Visible phase separation; some flocculation | Complete phase separation |
| Fenhexamid | Visible phase separation; some flocculation | Complete phase separation | Complete phase separation | Complete phase separation |

Despite the similar chemistries of the phosphate esters, the fertilizer mixtures prepared using the Example 2 phosphate ester suspension concentrates demonstrated improved stability over those using the other dispersants.

### Example 4. Preparation of Suspension Concentrates and Fertilizer Mixtures and Comparison to Commercial Products

Suspension concentrates containing bifenthrin and three different dispersants were prepared. Each suspension concentrate was prepared at the concentrations shown in Table 6 and were processed using an Eiger Mini Motormill M100. The three dispersants included Crodafos^{™} D4A-LQ (decyl phosphate ester with 5-6 EO, available from Croda International Plc, United Kingdom) and Multitrope^{™} 1214-LQ (decyl phosphate ester with 4-5 EO, available from Croda) and the phosphate ester of Example 2. Kelzan^{®} S is a xanthan gum product (available from CPKelco, Atlanta, GA).

**Table 6. Suspension Concentrate Compositions**

| Component | wt % |
|---|---|
| Bifenthrin | 17.5 |
| Deionized water | 69.15 |
| Propylene glycol | 5 |
| Agnique^{®} DFM 111S | 0.3 |
| Dispersant | 8 |
| Kelzan^{®} S | 0.05 |

The storage stability of each suspension concentrate was evaluated. Each suspension concentrate was used to prepare a fertilizer mixture. Each fertilizer mixture prepared contained 5% by weight of the suspension concentrate and 95% by weight of 10-34-0 fertilizer. Table 7 presents stability results for the suspension concentrates and fertilizer mixtures. Each suspension concentrate and fertilizer mixture was stored at room temperature (25 °C). Stability was assessed by visually observing the amount of phase separation, bleeding and flocculation of each suspension concentrate and fertilizer mixture.

**Table 7. Suspension Concentrate and Fertilizer Mixture Stability**

| Dispersant | SC storage stability | Fertilizer Mixture | | | | |
|---|---|---|---|---|---|---|
| | 2 weeks at 54 °C | 30 minutes | 60 minutes | 2 hours | 4 hours | 24 hours |
| Example 2 Phosphate Ester | No phase separation | Smooth, stable dispersion | Smooth, stable dispersion | Smooth, stable dispersion | Smooth, stable dispersion | Stable dispersion |
| Crodafos^{™} D4A-LQ | 40% phase separation | Complete phase separation | Complete phase separation | Complete phase separation | Complete phase separation | Complete phase separation |
| Multitrope^{™} 1214-LQ | Complete phase separation | Smooth, stable dispersion | Smooth, stable dispersion | Smooth, stable dispersion | Light flocculation, bottom clear | Complete phase separation |

Crodafos^{™} D4A-LQ and Multitrope^{™} 1214-LQ were introduced as having good electrolyte tolerance property. Despite the similar chemistries of the dispersants, the suspension concentrate and fertilizer mixture prepared using the Example 2 phosphate ester demonstrated improved storage stability over the suspension concentrates and fertilizer mixtures prepared with Crodafos^{™} D4A-LQ and Multitrope^{™} 1214-LQ.

### Example 5. Preparation of Different Fertilizer Mixtures

In this example, the suspension concentrate of Example 4 prepared with the Example 2 phosphate ester and bifenthrin was mixed with water and different concentrated liquid fertilizers to assess the stability of different fertilizer mixtures. Each mixture prepared contained 5% by weight of the suspension concentrate and 95% by weight of hard (1000 ppm) water or a concentrated liquid fertilizer. The concentrated liquid fertilizers used were AMS fertilizer, 10-34-0 fertilizer and Uran^{®}-32 fertilizer. The mixtures were prepared by adding the suspension concentrate and the water or liquid fertilizer to a standard tube (graduated cylinder) and inverting the tube 20 times. After 60 minutes of storage at room temperature, each of the mixtures showed no visible signs of phase separation or flocculation. The Applicant noticed that it is most difficult to obtain a stable fertilizer mixture when the concentrated liquid fertilizer is 10-34-0.

Example 6. Ethoxylation Effect on Phosphate Ester Performance Three samples were made using the methods of Example 1 and Example 2 to prepare Exaal^{™} 10-derived phosphate esters having 2 EO, 3 EO, and 4 EO. Bifenthrin suspension concentrate formulations were made with each phosphate ester and the suspension concentrates were mixed with 10-34-0. The suspension properties of the bifenthrin in 10-34-0 were compared. Table 6 shows the composition of the bifenthrin suspension concentrates.

Table 8 below presents the data collected from diluting the bifenthrin suspension concentrates made with each phosphate ester in 10-34-0 fertilizer solution (5% w/w).

**Table 8: Dilution Performance (5% w/w in 10-34-0)**

| Dispersant | t=0 | t=30 min | t=60 minutes | t=4 hours |
|---|---|---|---|---|
| Exxal 10 (2 EO) Phosphate | smooth, even dispersion | smooth, even dispersion | Stable, uniform dispersion | Stable, uniform dispersion |
| Exxal 10 (3 EO) Phosphate | smooth, even dispersion | smooth, even dispersion | Stable, uniform dispersion | Stable, uniform dispersion |
| Exxal 10 (4 EO) Phosphate | smooth, even dispersion | smooth, even dispersion | flocculation becoming apparent | 40% phase separation |

The data after 4 hours shows that the samples within the range of 2-3 EO performed better than the one with 4 EO. In the technical brochure for Crodafos^{™} D4A-LQ and Multitrope^{™} 1214-LQ, it is mentioned that a phosphate ester with a higher degree of ethoxylation provides better electrolyte tolerance. However, the Applicant has found the opposite effect from ethoxylation.

### Example 7. Hydrophobe Effect on Phosphate Ester Performance

Four phosphate esters were made using the process of example 2. The phosphate esters were branched C10-3 EO phosphate ester, branched 2-ethylhexyl-3 EO phosphate ester, Neodol 91-3 EO phosphate ester, and linear C10-3 EO phosphate ester. The resulting phosphate ester dispersants were formulated into four bifenthrin suspension concentrate formulations according to Table 6. The suspension concentrates were milled in an Eiger Mini Motormill M100 at 4,000 - 5,000 rpm for 15 minutes. The Kelzan S was added after the batch was milled. The samples were allowed to sit overnight and shaken again before dilution in 10-34-0 fertilizer. Dilutions were made at 5% w/w in 10-34-0 fertilizer solution, and observed at various time intervals over the course of 24 hours. The results are shown in Table 9.

**Table 9. The Effect of Hydrophobe on Phosphate Ester Performance**

| | SC with example 2 phosphate ester | SC with 2EH-3 EO phosphate ester | SC with Neodol 91-3 EO phosphate ester | SC with linear C10-3 EO phosphate ester |
|---|---|---|---|---|
| Suspension Concentrate Stability | Stable 2 weeks at 54 °C | Separated overnight | Separated overnight | Separated overnight |
| 5% w/w in 10-34-0, 1 hour | Stable, uniform dispersion | Stable, uniform dispersion | Slight flocculation | Stable, uniform dispersion |
| 5% w/w in 10-34-0, 4 hours | Stable, uniform dispersion | Slight flocculation | Heavy flocculation | Stable, uniform dispersion |
| 5% w/w in 10-34-0, 24 hours | Slight flocculation | Heavy flocculation | Heavy flocculation | Slight flocculation |

### Example 8. Suspension Concentrate and Fertilizer Mixture Stability - Mixed Pesticides

It is known to those skilled in the art that it is more difficult to prepare a stable suspension concentrate with two or more water-insoluble pesticides than with only a single pesticide. A suspension concentrate having two water-insoluble pesticides was prepared with the composition shown in Table 10. The suspension concentrate formulation was homogenized for a few minutes using an Omni PDH homogenizer at 12000 rpm. The homogenized suspension concentrate was mixed at 5% w/w with 10-34-0 fertilizer in an emulsion tube and observation was made without agitation over 24 hours. The total liquid height of the fertilizer mixture (100 g) reached the 128 mm mark on the emulsion tube.

**Table 10. Composition and results of the mixed active SC**

| | wt% |
|---|---|
| 10-34-0 Fertilizer solution | 54.05 |
| Water | 10.81 |
| Branched C10-3 EO phosphate ester of Example 2 | 2.7 |
| Bifenthrin | 16.22 |
| Azoxystrobin | 16.22 |
| 2 weeks at 54 °C | No separation |
| 5% w/w dilution to 10-34-0 - 2 hours | Stable, uniform dispersion |
| 5% w/w dilution to 10-34-0 - 4 hours | Uniform dispersion (no flocculation) with ~ 0.5% cream |
| 5% w/w dilution to 10-34-0 - 6 hours | Uniform dispersion (no flocculation) with ~ <1% cream |
| 5% w/w dilution to 10-34-0 - 24 hours | Uniform dispersion (no flocculation) with ~ 7% cream (i.e., ~ 9 mm). |

The two pesticide suspension concentrate was stable after 2 weeks at 54 °C even at only 2.7% use level of the phosphate ester of Example 2. Since the suspension concentrate formulation already contained a large amount of 10-34-0, the 5% dilution of the suspension concentrate formulation into 10-34-0 was very easy and the mixture was stable (without any flocculation). Some cream, an opaque layer, started to show up on top after 2 hours due to the density difference between the aqueous phase and the dispersed solid phases. After 24 hours, the fertilizer mixture with 5% suspension concentrate formulation in 10-34-0 showed a ~7% cream on top but the bulk sample was homogeneous (i.e., no flocculation). The fertilizer mixture was able to go back to the original appearance just after one inversion of the emulsion tube.

## Claims

1. A suspension concentrate comprising:
▪ 1-15% by weight of a phosphate ester having the general formula: 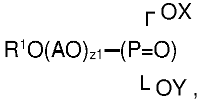 wherein X is selected from the group consisting of H-, a cation selected from Li, Na, K, and ammonium, and (AO)_{z2}R²; Y is selected from the group consisting of H-, a cation selected from Li, Na, K, and ammonium, and (AO)_{z3}R³; and R1, R² and R³ are, independently, linear or branched alkyl groups having from 4 to 11 carbon atoms, each AO, independently, is an alkyleneoxy group, and z1, z2, and z3 are, independently, a number from 1 to 4;
▪ optionally a fertilizer;
▪ 4-50% by weight of water-insoluble solid pesticide; and
▪ 35-95% by weight of water.

2. The suspension concentrate of claim 1, wherein the water-insoluble solid pesticide is selected from the group consisting of insecticides, fungicides, herbicides, bactericides, plant growth regulators, acaricides, anthelmintics, nematicides and combinations thereof, and more preferably the water-insoluble solid pesticide is selected from the group consisting of bifenthrin, imidacloprid, thiacloprid, acetamiprid, dinotefuran, nitenpyram, thiamethoxam, clothianidin, carbofuran, 1-naphthyl methylcarbamate, fipronil, diflubenzuron, trifloxystrobin, azoxystrobin, fluoxastrobin, captan, fenhexamid, tebuconazole, difenoconazole, mancozeb, myclobutanil, sulfur, copper oxychloride, procymidone, cymoxanil, alpha-cypermethrin, thiabendazole, carbendazim, chlorothalonil, triadimefon, calcium carbonate, atrazine, simazine, prometryn, ametryn, terbutryn, terbuthylazine, diuron, fluometuron, linuron, thidiazuron, tralkoxydim, metsulfuron-methyl, nicosulfulron, diflufenican, triasulfuron, chlorsulfuron, metribuzin, clopyralid and combinations thereof.

3. The suspension concentrate of claim 1 or 2, wherein the suspension concentrate is substantially free of clays and clay minerals.

4. The suspension concentrate of any of the preceding claims, wherein at least 60% by weight, preferably at least 70% by weight, of the phosphate ester is of the formula wherein X is H or a cation selected from Li, Na, K, and ammonium and Y is H or a cation selected from Li, Na, K, and ammonium.

5. The suspension concentrate of any of the preceding claims, wherein the suspension concentrate contains about 3-12% by weight of the phosphate ester, and preferably about 5-10% by weight of the phosphate ester; and about 10-40% by weight of the water-insoluble solid pesticide.

6. The suspension concentrate of any of the preceding claims, comprising one or more of about 1-10% by weight of propylene glycol, about 0.1-0.5% by weight of a defoamer, xanthan gum at a concentration less than about 0.1% by weight, and/or ammonium polyphosphate.

7. The suspension concentrate of any of the preceding claims, wherein AO is -CH₂CH₂O-, and wherein each of z1, z2, and z3, independently, has an average value between about 2 and about 3.5, and more preferably each of z1, z2, and z3, independently has an average value between about 2.7 and about 3.3.

8. The suspension concentrate of any of the preceding claims, wherein R¹ is branched, preferably isodecyl.

9. A fertilizer mixture comprising:
about 1-10% by weight of the suspension concentrate of any of the preceding claims; and
about 90-99% of a concentrated liquid fertilizer solution, more preferably a 10-34-0 fertilizer.

10. A method of forming a suspension concentrate according to claim 1, the method comprising:
preparing a phosphate ester by reacting an alcohol alkoxylate with one or more of polyphosphoric acid and phosphorous pentoxide, wherein the alcohol alkoxylate comprises a base alcohol having from 4 to 11 carbon atoms, and wherein the alcohol alkoxylate comprises, on average, from 1 to 4 alkyleneoxy groups; and
combining the phosphate ester with a water-insoluble solid pesticide and water to form the suspension concentrate.

11. The method of claim 10, wherein the alcohol alkoxylate is an ethoxylated alcohol containing an average of about 2 to about 3.5 ethoxy groups, more preferably an average of about 2.7 to about 3.3 ethoxy groups.

12. The method of claim 10 or **11,** further comprising adding an additive to the suspension concentrate, wherein the additive is selected from the group consisting of xanthan gum, glycol, defoamer, ammonium polyphosphate and combinations thereof.

13. The method of any one of claims 10-12, further comprising the step of mixing the suspension concentrate with a concentrated liquid fertilizer solution at a weight ratio from about 1:99 to 10:90 to form a fertilizer mixture, wherein the fertilizer mixture, stored at a temperature of about 25 °C, shows no visible flocculation at least one hour after preparation, preferably at least two hours after preparation, more preferably at least four hours after preparation, more preferably at least six hours after preparation, more preferably at least sixteen hours after preparation, and even more preferably at least twenty four hours after preparation.

14. The method of claim 13, wherein the concentrated liquid fertilizer is 10-34-0 liquid fertilizer.

## Patentansprüche

1. Suspensionskonzentrat umfassend:
• 1-15 Gew.-% eines Phosphatesters, der die allgemeine Formel: 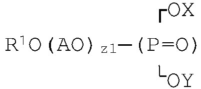 aufweist, wobei X aus der Gruppe ausgewählt ist bestehend aus H-, einem Kation ausgewählt unter Li, Na, K und Ammonium und (AO)_{z2}R²; Y aus der Gruppe ausgewählt ist bestehend aus H-, einem Kation ausgewählt unter Li, Na, K und Ammonium und (AO)_{z3}R³; und R1, R² und R³ unabhängig lineare oder verzweigte Alkylgruppen sind, die 4 bis 11 Kohlenstoffatome aufweisen, jedes AO unabhängig eine Alkylenoxygruppe ist und z1, z2 und z3 unabhängig eine Zahl von 1 bis 4 sind;
• wahlweise ein Düngemittel;
• 4-50 Gew.-% wasserunlösliches festes Pestizid; und
• 35-95 Gew.-% Wasser.

2. Suspensionskonzentrat nach Anspruch 1, wobei das wasserunlösliche feste Pestizid aus der Gruppe ausgewählt ist bestehend aus Insektenvertilgungsmitteln, Pilzvernichtungsmitteln, Unkrautvertilgungsmitteln, Bakteriziden, Pflanzenwachstumsregulatoren, Akariziden, Anthelmintika, Nematiziden und Kombinationen davon und noch bevorzugter das wasserunlösliche feste Pestizid aus der Gruppe ausgewählt ist bestehend aus Bifenthrin, Imidacloprid, Thiacloprid, Acetamiprid, Dinotefuran, Nitenpyram, Thiamethoxam, Clothianidin, Carbofuran, 1-Naphthylmethylcarbamat, Fipronil, Diflubenzuron, Trifloxystrobin, Azoxystrobin, Fluoxastrobin, Captan, Fenhexamid, Tebuconazol, Difenoconazol, Mancozeb, Myclobutanil, Schwefel, Kupferoxychlorid, Procymidon, Cymoxanil, Alpha-Cypermethrin, Thiabendazol, Carbendazim, Chlorthalonil, Triadimefon, Calciumcarbonat, Atrazin, Simazin, Prometryn, Ametryn, Terbutryn, Terbuthylazin, Diuron, Fluometuron, Linuron, Thidiazuron, Tralkoxydim, Metsulfuron-Methyl, Nicosulfuron, Diflufenican, Triasulfuron, Chlorsulfuron, Metribuzin, Clopyralid und Kombinationen davon.

3. Suspensionskonzentrat nach Anspruch 1 oder 2, wobei das Suspensionskonzentrat im Wesentlichen frei von Tonen und Tonmineralien ist.

4. Suspensionskonzentrat nach einem der vorhergehenden Ansprüche, wobei mindestens 60 Gew.-%, bevorzugt mindestens 70 Gew.-% des Phosphatesters die Formel aufweist, in der X H oder ein Kation ausgewählt unter Li, Na, K und Ammonium ist und Y H oder ein Kation ausgewählt unter Li, Na, K und Ammonium ist.

5. Suspensionskonzentrat nach einem der vorhergehenden Ansprüche, wobei das Suspensionskonzentrat etwa 3-12 Gew.-% des Phosphatesters und bevorzugt etwa 5-10 Gew.-% des Phosphatesters und etwa 10-40 Gew.-% des wasserunlöslichen festen Pestizids enthält.

6. Suspensionskonzentrat nach einem der vorhergehenden Ansprüche, umfassend eines oder mehrere von etwa 1-10 Gew.-% Propylenglykol, etwa 0,1-0,5 Gew.-% eines Entschäumers, Xanthangummi in einer Konzentration von weniger als etwa 0,1 Gew.-% und/oder Ammoniumpolyphosphat.

7. Suspensionskonzentrat nach einem der vorhergehenden Ansprüche, wobei AO -CH₂CH₂O- ist und wobei jedes von z1, z2 und z3 unabhängig einen Durchschnittswert zwischen etwa 2 und etwa 3,5 aufweist und noch bevorzugter jedes von z1, z2 und z3 unabhängig einen Durchschnittswert zwischen etwa 2,7 und etwa 3,3 aufweist.

8. Suspensionskonzentrat nach einem der vorhergehenden Ansprüche, wobei R¹ verzweigt, bevorzugt Isodecyl ist.

9. Düngemittelmischung umfassend:
etwa 1-10 Gew.-% des Suspensionskonzentrats nach einem der vorhergehenden Ansprüche an; und
etwa 90-99 % einer konzentrierten flüssigen Düngemittellösung, noch bevorzugter eines 10-34-0 Düngemittels.

10. Verfahren zum Bilden eines Suspensionskonzentrats nach Anspruch 1, wobei das Verfahren Folgendes umfasst:
Herstellen eines Phosphatesters durch Reagieren eines Alkoholalkoxylats mit einem oder mehreren
von Polyphosphorsäure und phosphorigem Pentoxid, wobei das Alkoholalkoxylat einen basischen Alkohol umfasst, der 4 bis 11 Kohlenstoffatome aufweist und wobei das Alkoholalkoxylat im Durchschnitt 1 bis 4 Alkylenoxygruppen umfasst; und
Kombinieren des Phosphatesters mit einem wasserunlöslichen festen Pestizid und Wasser,
um das Suspensionskonzentrat zu bilden.

11. Verfahren nach Anspruch 10, wobei das Alkoholalkoxylat ein ethoxylierter Alkohol ist, der im Durchschnitt etwa 2 bis etwa 3,5 Ethoxygruppen, noch bevorzugter im Durchschnitt etwa 2,7 bis etwa 3,3 Ethoxygruppen enthält.

12. Verfahren nach Anspruch 10 oder 11, ferner Zugeben eines Zusatzmittels zu dem Suspensionskonzentrat umfassend, wobei das Zusatzmittel aus der Gruppe ausgewählt ist bestehend aus Xanthangummi, Glykol, Entschäumer, Ammoniumpolyphosphat und Kombinationen davon.

13. Verfahren nach einem der Ansprüche 10-12, ferner den Schritt des Mischens des Suspensionskonzentrats mit einer konzentrierten flüssigen Düngemittellösung in einem Gewichtsverhältnis von etwa 1:99 bis 10:90 umfassend, um eine Düngemittelmischung zu bilden, wobei die Düngemittelmischung, die bei einer Temperatur von etwa 25 °C gelagert wird, keine sichtbare Ausfällung mindestens eine Stunde nach der Herstellung, bevorzugt mindestens zwei Stunden nach der Herstellung, noch bevorzugter mindestens vier Stunden nach der Herstellung, noch bevorzugter mindestens sechs Stunden nach der Herstellung, noch bevorzugter mindestens sechzehn Stunden nach der Herstellung und selbst noch bevorzugter mindestens zwanzig Stunden nach der Herstellung aufweist.

14. Verfahren nach Anspruch 13, wobei das konzentrierte flüssige Düngemittel 10-34-0 flüssiges Düngemittel ist.

## Revendications

1. Concentré en suspension comprenant :
• de 1 à 15 % en poids d'un ester de phosphate ayant la formule générale : 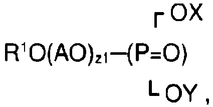 dans laquelle X est choisi dans le groupe constitué par H-, un cation choisi parmi Li, Na, K et l'ammonium, et (AO)_{z2}Z² ; Y est choisi dans le groupe constitué par H-, un cation choisi parmi Li, Na, K et l'ammonium, et (AO)_{z3}Z³ ; et R¹, R² et R³ sont, indépendamment, des groupes alkyle linéaires ou ramifiés ayant de 4 à 11 atomes de carbone, chaque AO est, indépendamment, un groupe alkylèneoxy, et z1, z2 et z3 sont, indépendamment, un nombre de 1 à 4 ;
• éventuellement un engrais ;
• de 4 à 50 % en poids d'un pesticide solide insoluble dans l'eau ; et
• de 35 à 95 % en poids d'eau.

2. Concentré en suspension selon la revendication 1, dans lequel le pesticide solide insoluble dans l'eau est choisi dans le groupe constitué par les insecticides, les fongicides, les herbicides, les bactéricides, les régulateurs de croissance des plantes, les acaricides, les anthelminthiques, les nématicides et des combinaisons de ceux-ci, et plus préférablement le pesticide solide insoluble dans l'eau est choisi dans le groupe constitué par le bifenthrine, l'imidaclopride, le thiaclopride, l'acétamipride, le dinotéfurane, le nitenpyram, le thiaméthoxame, la clothianidine, le carbofurane, le 1-naphtylméthylcarbamate, le fipronil, le diflubenzuron, la trifloxystrobine, l'azoxystrobine, la fluoxastrobine, le captane, le fenhexamide, le tébuconazole, le difénoconazole, le mancozèbe, le myclobutanil, le soufre, l'oxychlorure de cuivre, la procymidone, le cymoxanil, l'alpha-cyperméthrine, le thiabendazole, la carbendazime, le chlorothalonil, le triadiméfon, le carbonate de calcium, l'atrazine, la simazine, la prométryne, l'amétryne, la terbutryne, la terbuthylazine, le diuron, le fluométuron, le linuron, le thidiazuron, le tralkoxydime, le metsulfuron-méthyle, le nicosulfulron, le diflufénican, le triasulfuron, le chlorsulfuron, la métribuzine, le clopyralid et des combinaisons de ceux-ci.

3. Concentré en suspension selon la revendication 1 ou 2, dans lequel le concentré en suspension est sensiblement exempt d'argiles et de minéraux argileux.

4. Concentré en suspension selon l'une quelconque des revendications précédentes, dans lequel au moins 60 % en poids, de préférence au moins 70 % en poids, de l'ester de phosphate est de formule dans laquelle X est H ou un cation choisi parmi Li, Na, K et l'ammonium et Y est H ou un cation choisi parmi Li, Na, K et l'ammonium.

5. Concentré en suspension selon l'une quelconque des revendications précédentes, dans lequel le concentré en suspension contient d'environ 3 à 12 % en poids de l'ester de phosphate, et de préférence d'environ 5 à 10 % en poids de l'ester de phosphate ; et d'environ10 à 40 % en poids du pesticide solide insoluble dans l'eau.

6. Concentré en suspension selon l'une quelconque des revendications précédentes, comprenant un ou plusieurs d'environ 1 à 10 % en poids de propylène glycol, d'environ 0,1 à 0,5 % en poids d'un antimousse, une gomme xanthane à une concentration inférieure à environ 0,1 % en poids, et/ou du polyphosphate d'ammonium.

7. Concentré en suspension selon l'une quelconque des revendications précédentes, dans lequel AO est -CH₂CH₂O-, et dans lequel chacun de z1, z2 et z3 a, indépendamment, une valeur moyenne comprise entre environ 2 et environ 3,5, et plus préférablement chacun de z1, z2 et z3 a, indépendamment, une valeur moyenne comprise entre environ 2,7 et environ 3,3.

8. Concentré en suspension selon l'une quelconque des revendications précédentes, dans lequel R¹ est ramifié, de préférence un groupe isodécyle.

9. Mélange d'engrais comprenant :
d'environ 1 à 10 % en poids du concentré en suspension selon l'une quelconque des revendications précédentes ; et
d'environ 90 à 99 % d'une solution d'engrais liquide concentrée, plus préférablement un engrais 10-34-0.

10. Procédé de formation d'un concentré en suspension selon la revendication 1, le procédé comprenant :
la préparation d'un ester de phosphate en faisant réagir un alcoxylate d'alcool avec un ou plusieurs composés parmi l'acide polyphosphorique et le pentoxyde de phosphore, l'alcoxylate d'alcool comprenant un alcool basique ayant de 4 à 11 atomes de carbone, et l'alcoxylate d'alcool comprenant, en moyenne, de 1 à 4 groupes alkylèneoxy ; et
la combinaison de l'ester de phosphate avec un pesticide solide insoluble dans l'eau et de l'eau pour former le concentré en suspension.

11. Procédé selon la revendication 10, dans lequel l'alcoxylate d'alcool est un alcool éthoxylé contenant une moyenne d'environ 2 à environ 3,5 groupes éthoxy, plus préférablement une moyenne d'environ 2,7 à environ 3,3 groupes éthoxy.

12. Procédé selon la revendication 10 ou 11, comprenant en outre l'ajout d'un additif au concentré en suspension, dans lequel l'additif est choisi dans le groupe constitué par la gomme xanthane, le glycol, un antimousse, le polyphosphate d'ammonium et des combinaisons de ceux-ci.

13. Procédé selon l'une quelconque des revendications 10 à 12, comprenant en outre l'étape de mélange du concentré en suspension avec une solution d'engrais liquide concentrée selon un rapport pondéral d'environ 1:99 à 10:90 pour former un mélange d'engrais, dans lequel le mélange d'engrais, conservé à une température d'environ 25 °C, ne montre pas de floculation visible au moins une heure après la préparation, de préférence au moins deux heures après la préparation, plus préférablement au moins quatre heures après la préparation, plus préférablement au moins six heures après la préparation, plus préférablement au moins seize heures après la préparation, et encore plus préférablement au moins vingt heures après la préparation.

14. Procédé selon la revendication 13, dans lequel l'engrais liquide concentré est un engrais liquide 10-34-0.
